(19) Europäisches Patentamt
European Patent Office
Office européen des brevets

(11) **EP 1 340 972 B1**

(12) **EUROPÄISCHE PATENTSCHRIFT**

(45) Veröffentlichungstag und Bekanntmachung des Hinweises auf die Patenterteilung:
**17.07.2019 Patentblatt 2019/29**

(51) Int Cl.:
***G01N 11/16*** *(2006.01)* ***G01F 1/84*** *(2006.01)*
***G01N 9/00*** *(2006.01)*

(21) Anmeldenummer: **03008905.6**

(22) Anmeldetag: **24.04.2001**

(54) **Vibrations-Messgerät und Verfahren zum Messen einer Viskosität eines Fluids**

Vibration type measuring device and method of measuring a viscosity of a fluid

Appareil de mesure par vibration et méthode de mesure de viscosité d'un fluide

(84) Benannte Vertragsstaaten:
**AT BE CH CY DE DK ES FI FR GB GR IE IT LI LU MC NL PT SE TR**

(30) Priorität: **27.04.2000 DE 10020606**
**12.05.2000 EP 00110086**

(43) Veröffentlichungstag der Anmeldung:
**03.09.2003 Patentblatt 2003/36**

(62) Dokumentnummer(n) der früheren Anmeldung(en) nach Art. 76 EPÜ:
**01109975.1 / 1 158 289**

(73) Patentinhaber: **Endress + Hauser Flowtec AG**
**4153 Reinach/BL (CH)**

(72) Erfinder:
• **Matt, Christian**
**4147 Aesch, BL (CH)**
• **Wenger, Alfred, Dr.**
**8413 Neftenbach (CH)**

• **Fuchs, Michael**
**79427 Eschbach (DE)**
• **Drahm, Wolfgang, Dr.**
**85435 Erding (DE)**

(74) Vertreter: **Andres, Angelika Maria**
**Endress + Hauser (Deutschland) Holding GmbH,**
**PatServe,**
**Patent Abteilung,**
**Colmarer Strasse 6**
**79576 Weil am Rhein (DE)**

(56) Entgegenhaltungen:
**EP-A- 0 272 758    EP-A- 0 849 568**
**WO-A-95/16897    US-A- 4 524 610**
**US-A- 4 840 071**

• **A.P.WENGER: "vibrating fluid densimeters" IEEE TRANSACTIONS ON INDUSTRIAL ELECTRONICS AND CONTROL INSTRUMENTATION, Bd. 27, Nr. 3, August 1980 (1980-08), Seiten 247-253, XP000952929 usa**

**Beschreibung**

Die Erfindung betrifft ein Verfahren zum Messen einer Viskosität eines in einer Rohrleitung geführten Fluids sowie ein entsprechendes Vibrations-Meßgerät. Ferner betrifft die Erfindung die Verwendung eines Coriolis-Massedurchfluß/Dichtemeßgerätes vom Biegeschwingungstyp zum Messen der Viskosität des Fluids.

Coriolis-Massedurchfluß/Dichtemeßgeräte werden bevorzugt zum hochgenauen Messen eines Massedurchflusses und/oder einer Dichte eines in einer Rohrleitung geführten Fluids bevorzugt eingesetzt.

Ein Coriolis-Massedurchfluß/Dichtemeßgerät vom Biegeschwingungstyp ist bekanntlich ein Vibrations-Meßgerät, das mindestens ein in eine Rohrleitung fluiddicht, insb. druckdicht, eingefügtes Meßrohr zum Führen des Fluids aufweist, welches Meßrohr im Meßbetrieb mit wenigstens einer Frequenz multi-modal, insb. bi-modal, um eine Ruhelage oszilliert. Das Meßrohr wird dazu mittels einer elektromechanischen Erregeranordnung üblicherweise in einem ersten Biegeschwingungsmode derart angeregt, daß Corioliskräfte im strömenden Fluid erzeugt werden. Bei einem geraden Meßrohr kann als erster Biegeschwingungsmode z.B. ein Grundschwingungsmode eines zweiseitig fest eingespannten Biegebalkens dienen, der bekanntlich einen einzigen Schwingungsbauch aufweist. Bei einem, insb. U-oder Ω-förmig, vorgebogenen Meßrohr wird als erster Biegeschwingungsmode üblicherweise ein Grundschwingungsmode eines einseitig eingespannten Balkens, angeregt.

Bei derartigen Vibrations-Meßgeräten wird aufgrund der mittels des ersten Biegeschwingungsmodes im strömenden Fluid bewirkten Corioliskräfte gleichzeitig ein zweiter Schwingungsmode angeregt, dessen Amplitude auch vom Massedurchfluß abhängig ist.

Zum Ermitteln des Massedurchflusses werden eine Schwingung des Meßrohrs an einem einlaßseitigen Ende und eine Schwingung des Meßrohrs an einem auslaßseitigen Ende mittels einer entsprechenden Sensoranordnung erfaßt und in ein die einlaßseitigen Schwingungen repräsentierendes erstes und ein die auslaßseitigen Schwingungen repräsentierendes zweites Sensorsignal umgewandelt.

Die beiden erfaßten Schwingungen weisen aufgrund des dem ersten Biegeschwingungsmode überlagerten zweiten Schwingungsmodes, hier ebenfalls ein Biegeschwingungsmode, eine gegenseitige Phasenverschiebung auf. Diese Phasenverschiebung, die in entsprechender Weise auch zwischen den beiden Sensorsignalen meßbar ist, dient bei Coriolis-Massedurchfluß-/Dichtemeßgeräten als eine den Massedurchfluß repräsentierende Meßgröße.

Bei Coriolis-Massedurchfluss/Dichtemeßgeräten ist eine Resonanzfrequenz und/oder die Amplitude ersten Biegeschwingungsmode üblicherweise meßbar von der Dichte des Fluids abhängig. Somit ist z.B. für den Fall, daß das Meßrohr stets auf der Resonanzfrequenz des ersten Biegeschwingungsmodes erregt wird, diese ein Maß für die momentane Dichte des Fluids.

Vibrations-Meßgeräte der beschriebenen Art, insb. Coriolis-Massedurchfluß/Dichtemeßgeräte, gehören seit langem zum Stand der Technik. So ist z.B. bereits in den US-A 41 87 721, US-A 48 01 897, US-A 48 76 879, US-A 53 01 557, US-A 53 57 811, US-A 55 57 973, US-A 56 48 616, US-A 56 87 100, US-A 57 96 011, US-A 60 06 609 und EP-A 866 319 jeweils ein Vibrations-Meßgerät zum Messen eines Massedurchflusses und einer Dichte eines in einer Rohrleitung geführten Fluids beschrieben, welches Vibrations-Meßgerät umfaßt:

- einen Meßwerteaufnehmer

-- mit mindestens einem in die Rohrleitung eingefügten Meßrohr,

--- das an einem Einlaßende und an einem Auslaßende schwingfähig eingespannt ist und
--- das im Betrieb mit einer einstellbaren Erregerfrequenz relativ zu einer Ruhelage oszilliert,

-- mit einer elektromechanischen Erregeranordnung zum gleichzeitigen Erzeugen räumlicher Auslenkungen und elastischer Verformungen des Meßrohrs sowie
-- mit einer auf laterale Auslenkungen des Meßrohrs reagierenden Sensoranordnung

--- zum Erzeugen eines eine einlaßseitige Auslenkung des Meßrohrs repräsentierenden ersten Sensorsignals und
--- zum Erzeugen eines eine auslaßseitige Auslenkung des Meßrohrs repräsentierenden zweiten Sensorsignals, sowie

- eine Meßgeräte-Elektronik

-- mit einer Erregerschaltung, die einen die Erregeranordnung speisenden Erregerstrom erzeugt, und
-- mit einer Auswerteschaltung, die mittels des ersten Sensorsignals und mittels des zweiten Sensorsignals den Massedurchfluß des Fluids repräsentierenden Massedurchflußwert und einen die Dichte des Fluids repräsentierenden Dichtemeßwert liefert.

Ein für die Beschreibung eines strömenden Fluids weiterer wichtiger physikalischer Parameter ist die Viskosität, wobei bekanntlich zwischen einer kinematischen und einer dynamischen unterschieden werden kann.

Viskositäts- und dichtemessende Vibrations-Meßgeräte für strömende Fluide gehören gleichfalls zum Stand der Technik. So ist z.B. in der US-A 45 24 610 ein Vibrations-Meßgerät zum Messen einer Viskosität eines in einer Rohrleitung geführten Fluids beschrieben, welches Vibrations-Meßgerät umfaßt:

- einen Meßwerteaufnehmer

  -- mit einem in die Rohrleitung eingefügten geraden Meßrohr, das

    --- ein das Fluid führendes Meßrohrlumen aufweist und
    --- an einem Einlaßende sowie an einem Auslaßende schwingfähig eingespannt ist,

  -- mit einer elektromechanischen Erregeranordnung zum Erzeugen lateraler Auslenkungen und/oder torsionaler Verdrehungen des Meßrohrs sowie
  -- mit einer auf torsionale Verdrehungen des Meßrohrs reagierenden Sensoranordnung zum Erzeugen eines mittige Verdrehungen des Meßrohrs repräsentierenden Sensorsignals sowie

- eine Meßgeräte-Elektronik

  -- mit einer Erregerschaltung, die einen die Erregeranordnung speisenden Erregerstrom erzeugt, und
  -- mit einer Auswerteschaltung,

    --- die mittels des Sensorsignals und
    --- die mittels des Erregerstroms einen die Viskosität des Fluids repräsentierenden Viskositäts-Meßwert erzeugt.

Bei diesem als Dichte/Viskositätsmesser dienenden Vibrations-Meßgerät oszilliert das Meßrohr entweder abwechselnd im oben erwähnten ersten Biegeschwingungsmode zur Ermittlung der Dichte oder in einem Torsionsschwingungsmode zur Ermittlung der Viskosität oder aber simultan in beiden Schwingungsmoden jedoch mit unterschiedlichen Frequenzen. Aufgrund der vom Meßrohr ausgeführten Torsionsschwingungen werden im Fluid Scherkräfte verursacht, die den Torsionsschwingungen wiederum dämpfend entgegenwirken.

Des weiteren ist in der WO-A 95 16 897 ein als Coriolis-Massedurchfluß/Dichte/Viskositätsmesser dienendes Vibrations-Meßgerät vom Radialschwingungstyp zum Messen einer Viskosität eines in einer Rohrleitung geführten Fluids beschrieben, welches Vibrations-Meßgerät umfaßt:

- einen Meßwerteaufnehmer

  -- mit einem in die Rohrleitung eingefügten geraden Meßrohr, das

    --- ein das Fluid führendes Meßrohrlumen aufweist und
    --- an einem Einlaßende sowie an einem Auslaßende schwingfähig eingespannt ist,

  -- mit einer elektromechanischen Erregeranordnung zum Erzeugen axialsymmetrischer Verformungen und/oder lateraler Auslenkungen des Meßrohrs sowie
  -- mit einer auf axialsymmetrische Verformungen des Meßrohrs reagierenden Sensoranordnung zum Erzeugen eines die Verformungen des Meßrohrs repräsentierenden Sensorsignals sowie

- eine Meßgeräte-Elektronik

  -- mit einer Erregerschaltung, die einen die Erregeranordnung speisenden Erregerstrom erzeugt, und
  -- mit einer Auswerteschaltung,

    --- die mittels des Sensorsignals und
    --- die mittels des Erregerstroms einen die Viskosität des Fluids repräsentierenden Viskositäts-Meßwert erzeugt.

Bei diesem Coriolis-Massedurchfluß/Dichte/Viskositätsmesser oszilliert das Meßrohr zur Ermittlung der Viskosität und des Massedurchflusses primär in einem axialsymmetrischen Radialschwingungsmode, also in einem solchen Schwingungsmode, bei dem die Meßrohrwandung elastisch so verformt wird, daß eine Meßrohrschwerelinie im wesentlichen in einer statischen Ruhelage verbleibt. Außerdem wird das Meßrohr zumindest zeitweise zu Schwingungen in einem Sekundär-Schwingungsmode, z.B. auch inform des erwähnten ersten Biegeschwingungsmodes, angeregt, der dazu dient, Dichte und Druck des Fluids zu ermitteln.

In der WO-A 95 16 897 ist zwar beschrieben worden, daß Vibrations-Meßgeräte vom Radialschwingungstyp sowohl zur Messung des Massedurchflusses als auch zur Messung der Viskosität von Fluiden verwendet werden können, für die Messung des Massedurchflusses werden sie bislang jedoch fast ausschließlich auf gasförmige Fluiden angewendet. Es hat sich nämlich gezeigt, daß der dämpfende Einfluß der Viskosität insb. auf die Amplitude des oben erwähnten, insb. massedurchflußabhängigen, zweiten Schwingungsmode derart hoch ist, daß schon bei Viskositäten, die wenig oberhalb der von Wasser liegen, dieser zweite Schwingungsmode praktisch nicht mehr sensorisch erfaßt werden kann.

In der US-A 53 59 881 ist des weiteren ein Verfahren zur Messung der Viskosität eines strömenden Fluids beschrieben, bei dem zur Ermittlung des Massedurchflusses ein Coriolis-Massendurchfluß-/Dichtemeßgerät vom Biegeschwingungstyp verwendet wird und bei dem zur Bestimmung der Viskosität zusätzlich eine Druckdifferenz im strömenden Fluid entlang der Strömungsrichtung erfaßt wird.

Ferner sind in der US-A 52 53 533 und der US-A 60 06 609 Coriolis-Massedurchfluß-/Dichteaufnehmer vom Biegeschwingungstyp beschrieben, mittels denen zusätzlich zum Massedurchfluß und/oder zur Dichte auch eine Viskosität des Fluids erfaßt werden kann. Diese Coriolis-Massedurchfluß-/Dichteaufnehmer weisen jeweils ein gerades Meßrohr auf, das im Meßbetrieb simultan zum jeweils ersten Biegeschwingungsmode ebenfalls in einem Torsionsschwingungsmode oszilliert und dadurch zumindest abschnittsweise Torsionsschwingungen um eine Meßrohrlängsachse ausführt.

Es hat sich gezeigt, daß die bisher im Betrieb solcher Coriolis-Massendurchflußmessern praktisch nur zum Zwecke der Kompensation der primären Meßwerte, nämlich einem Massedurchflußmeßwert und einem Dichtemeßwert, durch eine Messung lediglich des Erregerstroms ermittelten Viskositäten für eine Ausgabe als ein zusätzlicher Viskositätsmeßwert zu ungenau bestimmt wurden.

Eine Aufgabe der Erfindung besteht daher darin ein Vibrations-Meßgerät zum genauen Messen einer Viskosität eines in einer Rohrleitung geführten Fluids anzugeben, das außerdem zum, insb. simultanen, Messen eines Massedurchflusses und einer Dichte des Fluids geeignet ist. Ferner besteht die Erfindung in einem Verfahren, das der Erhöhung der Genauigkeit der Viskositätsmessung mittels Coriolis-Massendurchfluß-/Dichtemeßgeräten dient.

Zur Lösung der Aufgabe besteht die Erfindung in einem Vibrations-Meßgerät zum Messen einer Viskosität eines in einer Rohrleitung geführten Fluids gemäß dem unabhängigen Anspruch 1. Ferner besteht die Erfindung in einem Verfahren zum Messen einer Viskosität gemäß dem unabhängigen Anspruch 4.

Ein Grundgedanke der Erfindung besteht darin, die Viskosität vom gemessenen Erregerstrom und von einer im Betrieb von derartigen Vibrations-Meßgeräten der beschriebenen Art, insb. von Coriolis-Massedurchfluß/ Dichte-Meßgeräten vom Biegeschwingungstyp, stets erfaßten lateralen Auslenkung des Meßrohrs, insb. von den zur Massedurchflußmessung einlaßseitig und/oder auslaßseitig erfaßten Schwingungen, abzuleiten.

Ein Vorteil der Erfindung besteht darin, daß zur deren Realisierung herkömmliche Coriolis-Massedurchfluß/ Dichteaufnehmer vom Biegeschwingungstyp verwendet werden können, ohne daß an diesen selbst Veränderungen hinsichtlich des mechanischen Aufbaus vorgenommen werden müssen. Somit kann eine Implementierung des Verfahrens der Erfindung z.B. auch in bereits im Einsatz befindliche Coriolis-Massedurchfluß/Dichtemeßgeräte erfolgen.

Nachfolgend soll die Erfindung und weitere Vorteile anhand von Ausführungsbeispielen sowie anhand der Figuren der Zeichnung näher erläutert werden.

Fig. 1      zeigt schematisch ein Vibrations-Meßgerät für ein strömendes Fluid,

Fig. 2      zeigt perspektivisch in einer ersten Seitenansicht ein Ausführungsbeispiel für einen Meßwerteaufnehmer des Vibrations-Meßgerätes gemäß Fig. 1,

Fig. 3      zeigt perspektivisch in einer zweiten Seitenansicht den Meßwerteaufnehmer gemäß Fig. 2,

Fig. 4      zeigt perspektivisch in einen vergrößerten Ausschnitt des Meßwerteaufnehmers gemäß Fig. 2,

Fig. 5      zeigt schematisch nach Art eines Blockschaltbildes Komponenten einer Auswerteschaltung eines Vibrations-Meßgerätes gemäß Fig. 1 und

Fig. 6      zeigen schematisch nach Art eines

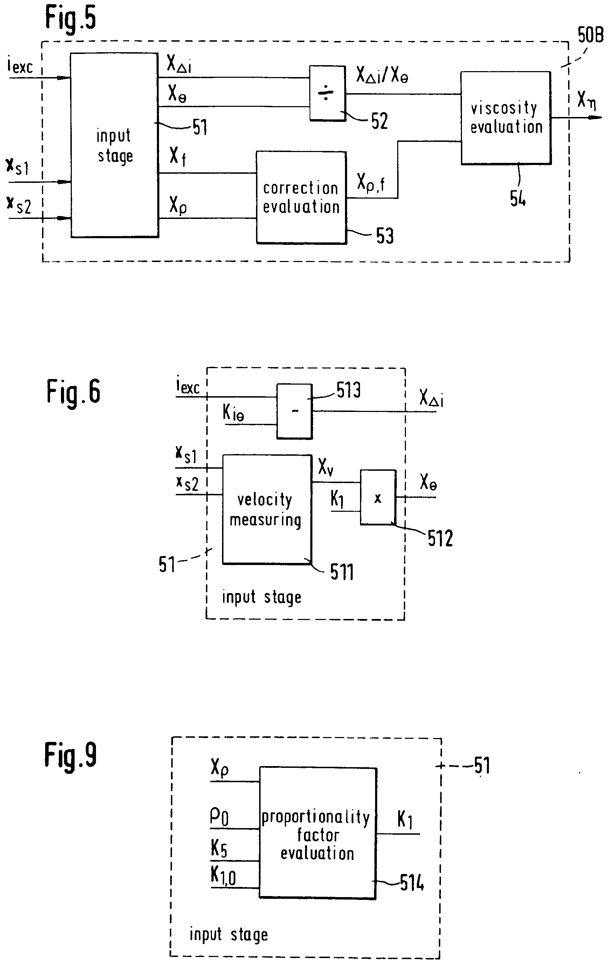

bis 9       Blockschaltbildes Ausgestaltungen der Auswerteschaltung gemäß Fig. 5.

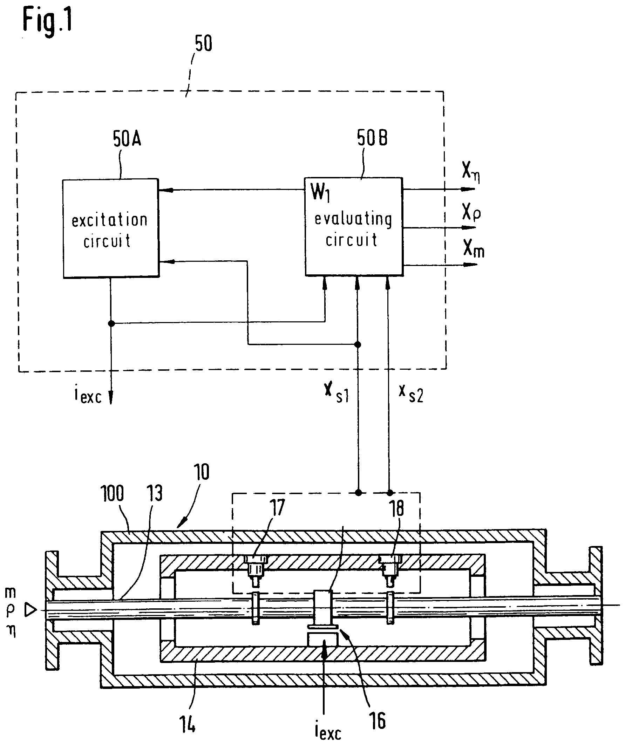

In der Fig. 1 ist schematisch ein Vibrations-Meßgerät dargestellt, das dazu dient eine Viskosität η eines in einer nicht dargestellten Rohrleitung geführten Fluids zu erfassen und in einen die Viskosität η des Fluids repräsentierenden Viskositäts-Meßwert $X_\eta$ abzubilden..

Ferner dient das Vibrations-Meßgerät bevorzugt dazu, neben der Viskosität η, eine Dichte ρ sowie einen Massendurchfluß m des Fluids, insb. simultan, zu ermitteln und in entsprechender Weise in einen die Dichte ρ repräsentierenden Dichte-Meßwert $X_\rho$ und in einen den Massendurchfluß m repräsentierenden Massendurchfluß-Meßwert $X_m$ umzuwandeln.

Dazu ist das Vibrations-Meßgerät bevorzugt als ein Coriolis-Massedurchfluß/Dichtemeßgerät ausgeführt. Der Aufbau und die Verwendung von derartigen Coriolis-Massedurchfluß/Dichtemeßgeräten zum Messen des Massendurchflusses m und/oder der Dichte ρ sind z.B. in den eingangs erwähnten US-A 41 87 721, US-A 48 76 879, US-A 56 48 616, US-A 56 87 100, US-A 57 96 011 und EP-A 866 319 beschrieben.

Zum Erfassen vorgenannter, das Fluid beschreibender Parameter, nämlich der Viskosität η, der Dichte ρ und ggf. des Massendurchflusses m, umfaßt das Vibrations-Meßgerät einen in die Rohrleitung fluiddicht, insb. druckdicht, eingefügten Meßwerteaufnehmer 10 zum Führen des Fluids.

Ferner umfaßt das Vibrations-Meßgerät eine dem Ansteuern des Meßwerteaufnehmers 10 und der Generierung vorgenannter Meßwerte dienende Meßgeräte-Elektronik 50. Für den Fall, daß das Vibrations-Meßgerät für eine Ankopplung an einen, insb. seriellen, Feldbus vorgesehen ist, weist die Meßgeräte-Elektronik 50 eine entsprechende Kommunikation-Schnittstelle für eine Datenkommunikation, z.B. zum Senden der Meßdaten an eine übergeordnete speicherprogrammierbare Steuerung oder ein übergeordnetes Prozeßleitsystem, auf. Selbstverständlich ist die Meßgeräte-Elektronik 50 in der dem Fachmann bekannten Weise vorzugsweise in einem entsprechenden, hier jedoch nicht dargestellten, Elektronik-Gehäuse unterzubringen.

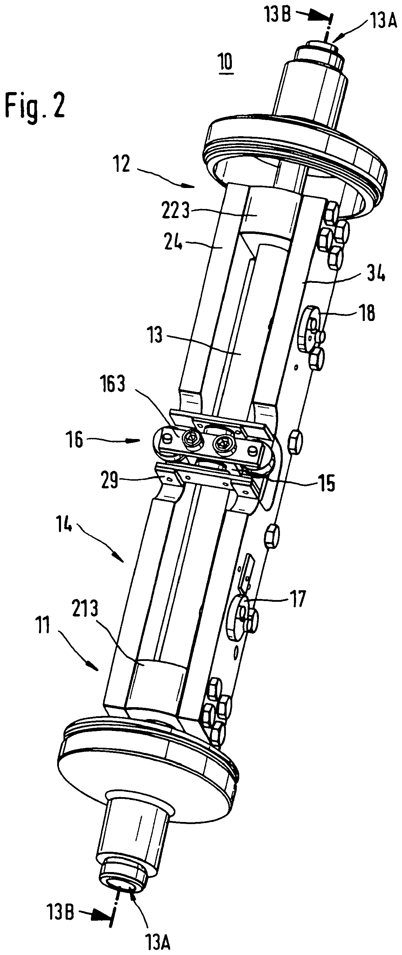

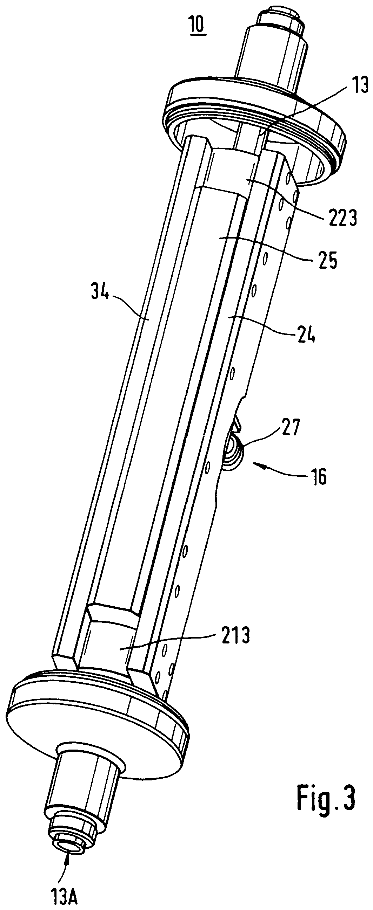

In den Fig. 2 und 3 ist ein Ausführungsbeispiel einer als ein Meßwerteaufnehmer 10 dienende physikalisch-zuelektrische Wandleranordnung vom Vibrations-Typ gezeigt. Der Aufbau einer derartigen Wandleranordnung ist z.B. auch in der US-A 60 06 609 ausführlich beschrieben. Ferner wird vorgenannte Wandleranordnung z.B. in von der Anmelderin hergestellten Coriolis-Massedurchfluß/Dichtemeßgeräten der Serie "PROMASS I" verwendet.

Der Meßwerteaufnehmer 10 umfaßt ein gerades, ein Einlaßende 11 und ein Auslaßende 12 aufweisendes Meßrohr 13 von vorgebbarem, elastisch verformbaren Meßrohrlumen 13A und von vorgebbarer Nennweite, welches Meßrohr 13 in einen starren, von einem Gehäuse 100 umhüllten Tragrahmen 14 schwingfähig eingespannt ist. Elastisches Verformen des Meßrohrlumens 13A bedeutet hier, daß zum Erzeugen von das Fluid beschreibenden Reaktionskräften, nämlich Corioliskräften, Masseträgheitskräften und/oder Scherkräften, im Betrieb des Meßwerteaufnehmers 10 eine Raumform und/oder eine Raumlage des das Fluid führenden Meßrohrlumens 13A innerhalb eines Elastizitätsbereiches des Meßrohrs 13 in vorgebbarer Weise zyklisch, insb. periodisch, verändert werden, vgl. z.B. die US-A 48 01 897, die US-A 56 48 616, die US-A 57 96 011 und/oder die US-A 60 06 609. Als Material für das Meßrohr 13 sind z.B. Titanlegierungen besonders geeignet. Anstelle von Titanlegierungen können aber auch andere für derartige, insb. gebogene, Meßrohre üblicherweise verwendete Materialien wie z.B. rostfreier Stahl oder Zirconium verwendet werden.

Der Tragrahmen 14 ist am Einlaßende 11 mit einer das Meßrohr 13 umhüllenden Einlaßplatte 213 und am Auslaßende 12 mit einer das Meßrohr 13 ebenfalls umhüllenden Auslaßplatte 223 fixiert. Des weiteren weist der Tragrahmen 14 eine erste Trägerplatte 24 und eine zweite Trägerplatte 34 auf, welche beiden Trägerplatten 24, 34 derart an der Einlaßplatte 213 und an der Auslaßplatte 223 fixiert sind, daß sie im wesentlichen parallel zum Meßrohr 13 sowie von diesem und voneinander beabstandet angeordnet sind, vgl. Fig. 2. Somit sind einander zugewandte Seitenflächen der beiden Trägerplatten 24, 34 ebenfalls parallel zueinander.

In vorteilhafter Weise ist ein Längsstab 25 an den Trägerplatten 24, 34 vom Meßrohr 13 beabstandet fixiert, der als Schwingungen des Meßrohrs 13 tilgende Auswuchtmasse dient. Der Längstab 25 erstreckt sich, wie in Fig. 3 dargestellt, praktisch parallel zur gesamten schwingfähigen Länge des Meßrohrs 13; dies ist jedoch nicht zwingend, der Längstab 25 kann selbstverständlich, falls erforderlich, auch kürzer ausgeführt sein.

Der Tragrahmen 14 mit den beiden Trägerplatten 24, 34, der Einlaßplatte 213, der Auslaßplatte 223 und ggf. dem Längsstab 25 hat somit eine Längsschwerelinie, die parallel zu einer das Einlaßende 11 und das Auslaßende 12 virtuell verbindenden Meßrohrlängsachse 13B verläuft.

In den Fig. 2 und 3 ist durch die Köpfe der gezeichneten Schrauben angedeutet, dass das erwähnte Fixieren der Trägerplatten 24, 34 an der Einlaßplatte 213, an der Auslaßplatte 223 und am Längsstab 25 durch Verschrauben erfolgen kann; es können aber auch andere geeignete und dem Fachmann geläufige Befestigungsarten angewendet werden.

Gemäß der Fig. 2 umfaßt der Meßwerteaufnehmer 10 ferner eine elektro-mechanische Erregeranordnung 16, die dazu dient, das Meßrohr 13 im Betrieb aus einer statischen Ruhelage räumlich auszulenken und somit in vorgebbarer Weise elastisch zu verformen.

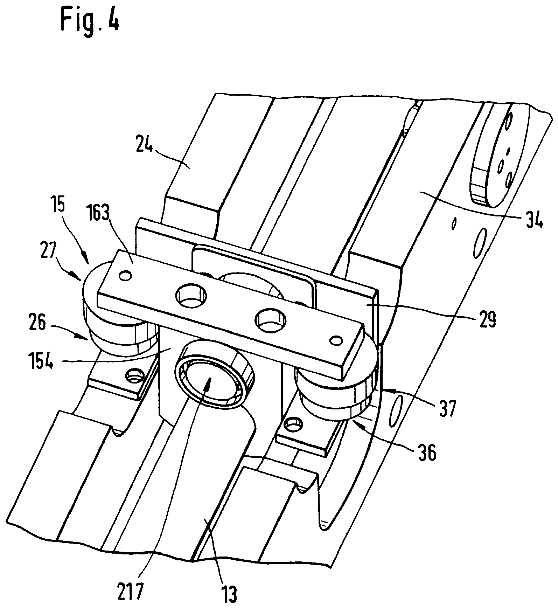

Die Erregeranordnung 16 weist dazu, wie in Fig. 4 dargestellt, eine starre, hier T-förmige, Hebelanordnung 15 mit einem am Meßrohr biegefest fixierten Ausleger 154 und mit einem Joch 163 auf. Das Joch 163 ist an einem vom Meßrohr 13 beabstandeten Ende des Auslegers 154 ebenfalls biegefest fixiert, und zwar so, daß es quer zur bereits erwähnten Meßrohrlängsachse 13B ausgerichtet ist. Als Ausleger 154 kann z.B. eine metallische Scheibe dienen, die das Meßrohr in einer Bohrung aufnimmt. Für weitere geeignete Ausführungen der Hebelanordnung 15 sei an dieser Stelle auf die bereits erwähnte US-A 60 06 609 verwiesen.

Die Hebelanordnung 15 ist bevorzugt, wie in Fig. 2 ohne weiteres erkennbar, so angeordnet, daß sie etwa in der Mitte zwischen Einlaß- und Auslaßende 11, 12 auf Meßrohr 13 einwirkt und somit das Meßrohr 13 im Betrieb mittig eine größte laterale Auslenkung ausführt.

Zum Antreiben der Hebelanordnung 15 umfaßt die Erregeranordnung 16 gemäß Fig. 4 eine erste Erregerspule 26 und einen zugehörigen ersten Dauermagneten 27 sowie eine zweite Erregerspule 36 und einen zugehörigen zweiten Dauermagneten 37, welche beiden Erregerspulen 26, 36 beiderseits des Meßrohrs 13 unterhalb des Jochs 163 am Tragrahmen 14, insb. lösbar, fixiert sind. Die beiden Erregerspulen 26, 36 sind elektrisch bevorzugt in Reihe geschaltet; sie können falls erforderlich selbstverständlich auch zueinander parallel geschaltet sein.

Die beiden Dauermagneten 27, 37 sind, wie in Fig. 2 und 4 dargestellt, derart voneinander beabstandet am Joch 163 fixiert, daß im Betrieb des Meßwerteaufnehmers 10 der Dauermagnet 27 im wesentlichen von einem Magnetfeld der Erregerspule 26 und der Dauermagnet 37 im wesentlichen von einem Magnetfeld der Erregerspule 36 durchsetzt und aufgrund entsprechender elektromagnetischer Kraftwirkungen bewegt werden. Dazu wird die Erregeranordnung 16 mittels eines von einer entsprechenden Erregerschaltung 50A der Meßgeräte-Elektronik 50 gelieferten gleichfalls oszillierenden, uni-polaren oder bi-polaren, Erregerstrom $i_{exc}$ von einstellbarer Amplitude und von einstellbarer Erregerfrequenz $f_{exc}$ derart gespeist, daß die Erregerspulen 26, 36 im Betrieb von diesem durchflossen sind und in entsprechender Weise die Magnetfelder zum Bewegen der Dauermagneten 27, 37 erzeugt werden. Der Erregerstrom $i_{exc}$ kann z.B. als eine harmonische Schwingung, als eine Dreieck-Schwingung oder als eine Rechteck-Schwingung ausgebildet sein. Die, insb. einzige, Erregerfrequenz $f_{exc}$ des Erregerstrom $i_{exc}$ entspricht, wie bei Vibrations-Meßgeräten der beschriebenen Art üblich, einer momentanen mechanischen Resonanzfrequenz des fluidführenden Meßrohrs 13.

Die mittels der Magnetfelder der Erregerspulen 26, 36 erzeugten Bewegungen der Dauermagnete 27, 37 werden via Joch 163 und Ausleger 154 auf das Meßrohr 13 übertragen. Diese Bewegungen der Dauermagnete 27, 37 sind so ausgebildet, daß das Joch 163 mit der, insb. einzigen, Erregerfrequenz $f_{exc}$ alternierend in Richtung der Trägerplatte 24 oder in Richtung der Trägerplatte 34 aus seiner Ruhelage ausgelenkt wird. Eine entsprechende, zur bereits erwähnten Meßrohrlängsachse 13B parallele Drehachse der Hebelanordnung 15 kann z.B. durch den Ausleger 154 verlaufen.

Bevorzugt umfaßt der Tragrahmen 14 ferner eine mit den Trägerplatten 24, 34, insb. lösbar, verbundene Halterung 29 für die elektromechanische Erregeranordnung 16, die insb. dem Haltern der Erregerspulen 26, 36 und ggf. einzelner Komponenten einer weiter unten genannten Magnetlageranordnung 217 dient.

Wie bereits erwähnt, dient die Erregeranordnung 16 dazu, im Betrieb des Meßwerteaufnehmers 10 das Meßrohr 13 zu mechanischen Schwingungen um eine statische Ruhelage anzuregen, wodurch dieses zumindest laterale, insb. lateral oszillierende, Auslenkungen ausführt.

Beim Meßwerteaufnehmer 10 des Ausführungsbeispiels bewirken diese lateralen Auslenkungen gleichzeitig eine elastische Verformung des Meßrohrlumens 13A des am Einlaßende 11 und am Auslaßende 12 in der oben beschriebenen Weise fest eingespannten Meßrohrs 13. Diese Verformung des Meßrohrlumens 13A ist dabei praktisch über die gesamte Länge des Meßrohrs 13 ausgebildet.

Ferner wird im Meßrohr 13 aufgrund seiner Einspannung und aufgrund eines via Hebelanordnung 15 auf das Meßrohr 13 wirkenden Moments gleichzeitig zu den lateralen Auslenkungen zumindest abschnittsweise eine torsionale Verdrehung erzwungen. Diese Verdrehung des Meßrohrs 13 kann so ausgebildet sein, daß eine laterale Auslenkung des vom Meßrohr 13 beabstandeten Ende des Auslegers entweder gleichgerichtet oder entgengerichtet zur lateralen Auslenkung des Meßrohrs 13 ist. Anders gesagt, das Meßrohr 13 kann Torsionsschwingungen in einem dem ersteren Fall entsprechenden ersten Torsionsmode oder in einem dem letzteren Fall entsprechenden zweiten Torsionsmode ausführen, wobei beim Meßwerteaufnehmer 10 gemäß dem Ausführungsbeispiel eine Eigenfrequenz des zweiten Torsionsmode, von z.B. 900 Hz, in etwa doppelt so hoch ist wie die des ersten.

Für den Fall, daß das Meßrohr 13 betriebsmäßig Torsionsschwingungen lediglich im zweiten Torsionsmode ausführen soll, ist in vorteilhafter Weise eine auf dem Wirbelstromprinzip beruhende Magnetlageranordnung 217 in die Erregeranordnung 16 integriert, die dazu dient, die, insb. von der momentanen Dichte des Fluids abhängige, Lage dieser Drehachse einzustellen und/oder zu stabilisieren. Mittels der Magnetlageranordnung 217 kann somit sichergestellt werden, daß das Meßrohr 13 stets im zweiten Torsionsmode schwingt und somit allfällige äußere Störeinflüsse auf das Meßrohr 13 nicht zu einem spontanen Wechsel in einen anderen, insb. den ersten, Torsionsmode führen. Einzelheiten einer solchen Magnetlageranordnung sind z.B. in der US-A 60 06 609 ausführlich beschrieben; ferner ist die Verwendung von derartigen Magnetlageranordnungen bereits von Meßwerteaufnehmern der erwähnten Serie "PROMASS I" bekannt.

Bevorzugt wird für den Meßwerteaufnehmer 10 gemäß dem Ausführungsbeispiel die Erregerfrequenz $f_{exc}$ so eingestellt, daß ausschließlich der zweite Torsionsmode angeregt wird und dementsprechend der erste im wesentlichen unterdrückt ist; falls erforderlich, kann aber auch der erste Torsionsmode angeregt werden.

Gemäß Fig. 1 weist der Meßwerteaufnehmer 10 des weiteren eine Sensoranordnung 60 auf, die dazu dient, momentane räumliche Auslenkungen des Meßrohrs 13 zu erfassen und entsprechende, insb. analoge, Signale zu erzeugen. Die Sensoranordnung 60 umfaßt dazu einen auf einlaßseitige erste lateral oszillierende Auslenkungen des Meßrohrs 13 reagierenden ersten Sensor 17 und einen auf auslassseitige zweite lateral oszillierende Auslenkungen des Meßrohrs 13 reagierenden, zweiten Sensor 18. Beide Sensoren 17, 18 sind, wie in Fig. 2 dargestellt, entlang des Meßrohrs 13 voneinander beabstandet, insb. in gleichem Abstand zur Mitte des Meßrohrs 13, am Tragrahmen 14, insb. an einer der Trägerplatten 24 oder 34, fixiert angeordnet.

Als Sensoren 17, 18 werden bevorzugt geschwindigkeitsmessende, elektrodynamische Sensoren verwendet. Es können aber auch weg-, oder beschleunigungsmessende, elektrodynamische oder aber auch optische Sensoren verwendet werden. Selbstverständlich können auch andere dem Fachmann bekannte, auf derartige Auslenkungen reagierende Sensoren als Sensoren 17, 18 dienen.

Mittels der Sensoren 17, 18 erzeugt die Sensoranordnung 60 im Betrieb somit ein die einlaßseitigen lateralen Auslenkungen repräsentierendes erstes Sensorsignal $x_{s1}$ sowie ein die auslassseitigen lateralen Auslenkungen repräsentierendes zweites Sensorsignal $x_{s2}$.

Die Sensorsignale $x_{s1}$, $x_{s2}$ sind, wie in Fig. 1 gezeigt, einer, insb. programmierbaren, Auswerteschaltung 50B der Meßgeräte-Elektronik 50 zugeführt, die insb. dazu dient, den Viskositäts-Meßwert $X_\eta$ und den Dichte-Meßwert $X_\rho$ zu erzeugen. Nach einer bevorzugten Ausgestaltung der Erfindung, liefert die Auswerteschaltung 50B ferner den Massedurchfluß-Meßwert $X_m$.

Die beiden Sensorsignale $x_{s1}$, $x_{s2}$ weisen jeweils eine der Erregerfrequenz $f_{exc}$ entsprechende Signalfrequenz auf.

Bevorzugt umfaßt die Sensoranordnung 60 ferner eine Verstärkerschaltung, die dazu dient beide Sensorsignale $x_{s1}$, $x_{s2}$ auf eine gleiche Amplitude einzustellen. Dafür geeignete Amplitudenregelschaltungen sind z.B. in der US-A 56 48 616 oder in der EP-A 866 319 gezeigt.

Das Einstellen der Erregerfrequenz $f_{exc}$ erfolgt, wie bei derartigen Erregeranordnungen üblich, bevorzugt mittels einer Phasenregel-Schleife der Erregerschaltung 50A. Der Aufbau und die Verwendung einer solchen Phasenregel-Schleife zum Einstellen einer mechanischen Resonanzfrequenz ist z.B. in der US-A 48 01 897 ausführlich beschrieben. Selbstverständlich können auch andere, dem Fachmann bekannte Frequenzregelschaltungen verwendet werden, die dem Einstellen mechanischer Resonanzfrequenzen für Vibrations-Meßgeräte der beschriebenen Art dienen, vgl. z.B. die US-A 45 24 610, US-A 48 01 897. Ferner sei hinsichtlich einer Verwendung einer solchen Frequenzregelschaltung für Meßwerteaufnehmer der beschriebenen Art auf die bereits erwähnte Serie "PROMASS I" verwiesen.

Zum Einstellen des Erregerstroms $i_{exc}$ dient, wie bei derartigen Vibrations-Meßgeräten üblich, eine entsprechende Verstärkerschaltung, die von einem die einzustellende Erregerfrequenz $f_{exc}$ repräsentierenden Frequenzstellsignal und von einem die Amplitude des einzustellenden Erregerstroms $i_{exc}$ repräsentierenden Erregerstromstellsignal gesteuert ist. Das Frequenzstellsignal kann z.B. eine von der oben erwähnten Frequenzregelschaltung gelieferte Gleichspannung mit einer frequenz-repräsentativen Amplitude sein.

Zum Erzeugen des Erregerstroms $i_{exc}$ umfaßt die Erregerschaltung 50A eine entsprechende Amplitudenregelschaltung die dazu dient, mittels der momentanen Amplitude wenigstens eines der beiden Sensorsignale $x_{s1}$, $x_{s2}$ sowie mittels eines entsprechenden konstanten oder variablen Amplitudenreferenzwerts $W_1$ das Erregerstromstellsignal zu erzeugen; ggf. kann auch eine momentane Amplitude des Erregerstroms $i_{exc}$ zur Generierung des Erregerstromstellsignals hinzugezogen werden. Derartige Amplitudenregelschaltungen sind dem Fachmann ebenfalls bekannt. Als ein Beispiel für eine solche Amplitudenregelschaltung sei nochmals auf Coriolis-Massedurchflußmesser der Serie "PROMASS I" verwiesen. Deren Amplitudenregelschaltung ist bevorzugt so ausgeführt, daß die Schwingungen des jeweiligen Meßrohrs im bereits erwähnten ersten Biegeschwingungsmode auf eine konstante, also dichteunabhängige, Amplitude geregelt werden.

Das erfindungsgemäße Verfahren zum Ermitteln einer Viskosität $\eta$ des Fluids soll nachfolgend am Beispiel des vorbeschriebenen Meßwerteaufnehmers 10 näher erläutert werden. Es sei vorangestellt, daß unter dem Begriff Viskosität sowohl eine dynamische Viskosität als auch eine kinematische Viskosität des Fluids verstanden werden kann, da sich beide Viskositäten mittels der ebenfalls im Betrieb des Vibrations-Meßgerätes gemessenen Dichte ohne weiteres ineinander umrechnen lassen. Ferner kann anstelle der Viskosität $\eta$ auch deren Kehrwert, also eine Fluidität des Fluids ermittelt werden.

Bei Vibrations-Meßgeräten mit wenigstens einem in der vorbeschriebenen Weise oszillierenden Meßrohr bewirken die räumlichen Auslenkungen des jeweiligen Meßrohrs Scherkräfte verursachenden Bewegungen des Fluids. Diese Scherkräfte im Fluid sind von dessen Viskosität $\eta$ mitbestimmt und wirken inform von Reibungsverlusten dämpfend auf das oszillierende Meßrohr.

Es hat sich gezeigt, daß ein Verhältnis $i_{exc}/\theta$ des Erregerstroms $i_{exc}$ zu einer praktisch nicht direkt meßbaren Geschwindigkeit $\theta$ einer Scherkräfte verursachenden Bewegung des Fluids eine repräsentative Schätzung für eine dieser Auslenkung entgegenwirkenden Dämpfung ist. Diese Dämpfung der Auslenkung ist dabei durch einen Dämpfungsanteil mitbestimmt, der auf viskose Reibung innerhalb des Fluids zurückzuführen ist und kann somit zur Ermittlung der Viskosität dienen. Dementsprechend sind zur Bestimmung der Viskosität $\eta$ neben dem Erregerstrom $i_{exc}$ auch die Geschwindigkeit $\theta$ vorgenannter Bewegungen des Fluids zu ermitteln.

Für das in der bereits erwähnten US-A 45 24 610 beschriebene Verfahren zur Viskositätsmessung wird die Geschwindigkeit $\theta$ mittels einer von einem Antriebshebel ausgeführten Antriebsbewegung geschätzt, die torsionale Verdrehungen eines entsprechenden Meßrohrs bewirkt. Dieser Antriebshebel entspricht somit in etwa der Hebelanordnung 15.

Zum Erfassen der Geschwindigkeit $\theta$ zum Zwecke der Viskositätsmessung mittels eines Meßwerteaufnehmers der beschriebenen Art ist die Hebelanordnung 15 jedoch nur bedingt geeignet. Zum einen deshalb, weil wie bereits erwähnt, die Lage der Drehachse der Hebelanordnung 15 veränderlich ist und dementsprechend stets aktuell ermittelt werden muß; zum anderen auch deshalb, weil eine derartige Hebelanordnung oftmals an Meßwerteaufnehmern der beschriebenen Art, insb. bei Coriolis-Massedurchfluß/ Dichteaufnehmern, nicht vorgesehen ist.

Entsprechend dem Grundgedanken der Erfindung wird die Geschwindigkeit $\theta$ daher nicht direkt an der Hebelanordnung 15 des Meßwerteaufnehmers 10 erfaßt, sondern mittels der von der Sensoranordnung 60 gelieferten Sensorsignale $x_{s1}$, $x_{s2}$ gewonnen.

Die Verwendung der Sensorsignale $x_{s1}$, $x_{s2}$ zur Messung der Viskosität $\eta$ basiert auf der überraschenden Erkenntnis, daß die Geschwindigkeit $\theta$ der für die viskose Reibung verantwortlichen Bewegung des Fluids zumindest im Arbeitsbereich von Meßwerteaufnehmern der beschriebenen Art in einer reproduzierbaren, insb. linearen, Beziehung zur momentanen lateralen Auslenkung des Meßrohrs 13 steht. Es kann somit mit guter Näherung angenommen werden, daß gilt:

$$X_{\theta} = K_1 \cdot X_v \qquad\qquad (1)$$

Darin sind

$X_v$     ein vom Sensorsignal $x_{s1}$ und/oder vom Sensorsignal $x_{s2}$ abgeleiteter Geschwindigkeitsmeßwert, der eine Geschwindigkeit der lateralen Auslenkung des Meßrohrs 13 momentan repräsentiert,

$X_{\theta}$     ein Schätzwert für die Geschwindigkeit $\theta$ der Bewegung des Fluids, die Scherkräfte und somit eine viskose Reibung im Fluid bewirkt und

$K_1$     ein, insb. durch Kalibriermessungen, zu ermittelnder Proportionalitätsfaktor.

Bei dem Geschwindigkeitsmeßwert $X_v$ kann es sich sowohl um einen von einem einzigen Sensorsignal $x_{s1}$, $x_{s2}$ als auch um einen von beiden Sensorsignalen $x_{s1}$, $x_{s2}$, insb. von deren Signalsumme $x_{s1} + x_{s2}$, abgeleiteten Signalwert, z.B. eine momentane Signalamplitude, handeln. Für den Fall, daß die Sensoren 17, 18 symmetrisch zur Mitte des Meßrohrs 13 angeordnet und die Sensorsignale $x_{s1}$, $x_{s2}$, wie bereits erwähnt, eine gleiche oder gleich-geregelte Signalamplitude aufweisen, ist die Signalsumme $x_{s1} + x_{s2}$ beim Meßwerteaufnehmer 10 gemäß dem Ausführungsbeispiel proportional zur lateralen Auslenkung in der Mitte des Meßrohrs 13.

Zum Erzeugen des Schätzwerts $X_{\theta}$ für die Geschwindigkeit $\theta$ umfaßt die Auswerteschaltung 50B daher, wie in Fig. 5 und 6 schematisch dargestellt, eine Eingangsstufe 51 mit einer das Sensorsignal $x_{s1}$ und/oder das Sensorsignal $x_{s2}$, insb. digitalisierend, verarbeitenden ersten Meßschaltung 511 zum Erzeugen des Geschwindigkeitsmeßwerts $X_v$. Ein derartige, insb. Signalamplituden messende, Meßschaltung ist z.B. in der US-A 56 48 616 oder der EP-A 866 319 gezeigt.

Wie in Fig. 6 schematisch dargestellt, umfaßt diese Eingangsstufe 51 ferner einen der Realisierung der Gleichung (1) dienenden Multiplizierer 512, der den von der Meßschaltung 511 gelieferten und an einem ersten Eingang anliegenden Geschwindigkeitsmeßwert $X_v$ mit dem an einem zweiten Eingang anliegenden Proportionalitätsfaktor $K_1$ multipliziert und somit ausgangs den Schätzwert $X_{\theta}$ liefert.

Der mittels Gleichung (1) formulierte Zusammenhang ist für jeweilige konkrete Realisierungen des Meßwerteaufnehmers 10 durch entsprechende Kalibriermessungen zu bestimmen und in die Meßgeräte-Elektronik 50 zu implementieren. Zum Ermitteln des Proportionalitätsfaktor $K_1$ ist während einer Kalibriermessung z.B. die tatsächliche Geschwindigkeit der Verdrehung in der Mitte des Meßrohrs 13 zu bestimmen und in Relation zu den gleichzeitig erzeugten Sensorsignalen $x_{s1}$ und/oder $x_{s2}$ zu setzen. Ferner besteht die Möglichkeit, den Proportionalitätsfaktor $K_1$ für eine Serie von Meßwerteaufnehmern z.B. mittels dem Fachmann bekannter Finite-Elemente-Methoden numerisch zu berechnen.

Insbesondere für den Fall, daß es sich bei dem zu messenden Fluid um eine nicht-newtonsche Flüssigkeit handelt, ist der Einfluß des momentanen Massedurchflusses auf die Geschwindigkeit $\theta$ und damit bei der Ermittlung des Schätzwertes $X_{\theta}$ entsprechend zu berücksichtigen. Bei einer nicht-newtonschen Flüssigkeit würden sich nämlich die Scherkräfte mit zunehmendem Massedurchfluß m verringern.

Zum Kalibrieren des Meßwerteaufnehmers 10 werden üblicherweise zwei oder mehrere verschiedene Fluide mit bekannten Parametern, wie z.B. Dichte $\rho$, Massedurchfluß m, Viskosität $\eta$ und/oder Temperatur, nacheinander durch den Meßwerteaufnehmer 10 hindurchströmen gelassen und die entsprechenden Reaktionen des Meßwerteaufnehmers 10, wie z.B. der momentane Erregerstrom $i_{exc}$ und/oder die momentane Erregerfrequenz $f_{exc}$, gemessen. Die eingestellten Parameter und die jeweils gemessenen Reaktionen des Meßwerteaufnehmers 10 werden in entsprechender Weise zueinander in Relation gesetzt und somit auf die entsprechenden Kalibrierkonstanten, z.B. den Proportionalitätsfaktor $K_1$, abgebildet. Die ermittelten Kalibrierkonstanten können dann z.B. in Form von digitalen Daten in einem Tabellenspeicher der Auswerteschaltung 50B abgelegt werden; sie können aber auch als analoge Einstellwerte für entsprechende Rechenschaltungen dienen. Es sei an dieser Stelle darauf verwiesen, daß das Kalibrieren von Meßwerteaufnehmern dem Fachmann an und für sich bekannt ist und daher keiner detaillierteren Erläuterung bedarf.

Die Dämpfung der Schwingungen des Meßrohrs 13 ist, neben dem auf die viskose Reibung zurückzuführenden Dämpfungsanteil auch durch einen vom Fluid praktisch unabhängigen Dämpfungsanteil mitbestimmt. Dieser Dämpfungsanteil wird von Reibungskräften verursacht, die z.B. in der Erregeranordnung 16 und im Material des Meßrohr 13 wirken. Anders gesagt, der gemessene Erregerstrom $i_{exc}$ repräsentiert die Gesamtheit der Reibungskräfte und/oder Reibungsmomente im Meßwerteaufnehmer 10. Zur Ermittlung der Viskosität $\eta$ des Fluids ist der vom Fluid unabhängige Dämpfungsanteil dementsprechend aus dem Verhältnis $i_{exc}/\theta$ zu eliminieren, d.h es ist ein Verhältnis $\Delta i_{exc}/\theta$ eines Erregerstromanteils $\Delta i_{exc}$, der dem auf die viskose Reibung zurückzuführenden Dämpfungsanteil des Erregerstroms $i_{exc}$ entspricht, zur Geschwindigkeit $\theta$ zu ermitteln.

Zum Erzeugen eines den Erregerstromanteil $\Delta i_{exc}$ und somit die viskose Reibung repräsentierenden Reibungsmeßwerts $X_{\Delta i}$ wird im Betrieb des Vibrations-Meßgerätes mittels der Eingangsstufe 51 vom Erregerstrom $i_{exc}$ oder einem diesen momentan repräsentierenden Erregerstrommeßwert, ein entsprechender Leerstrommeßwert $K_{i0}$ subtrahiert, der die vorgenannten Reibungskräfte in der Erregeranordnung 16 repräsentiert. Dazu umfaßt Eingangsstufe 51, wie in Fig. 6 schematisch dargestellt, eine, insb. digitalisierende, zweite Meßschaltung 513, die von dem an einem Minuend-Eingang anliegenden Erregerstrom $i_{exc}$ oder dem Erregerstrommeßwert den an einem Subtrahend-Eingang anliegenden Leerstrommeßwert $K_{i0}$ subtrahiert und somit ausgangs den Reibungsmeßwert $X_{\Delta i}$ liefert.

Der Leerstrommeßwert $K_{i0}$ ist ebenfalls während einer Kalibrierung des Vibrations-Meßgeräts, z.B. für ein evakuiertes oder ein nur Luft führendes Meßrohr 13, zu bestimmen und entsprechend in der Meßgeräte-Elektronik 50 abzuspeichern oder einzustellen. Es ist für den Fachmann ohne weiteres klar, daß falls erforderlich, andere den Leerstrommeßwert $K_{i0}$ beinflußende physikalische Parameter, wie z.B. eine momentane Temperatur des Meßrohrs und/oder des Fluids, beim Kalibrieren des Leerstrommeßwert $K_{i0}$ zu berücksichtigen sind.

Zum Erzeugen eines entsprechenden Quotientenwerts $X_{\Delta i}/X_\theta$ für den auf viskose Reibung im Fluid zurückzuführenden Dämpfungsanteil $\Delta i_{exc}/\theta$ umfaßt die Auswerteschaltung 50B, wie in Fig. 5 dargestellt, ferner einen ersten Funktionsblock 52, der dazu dient, den an einem Dividend-Eingang anliegenden Reibungsmeßwert $X_{\Delta i}$ durch den an einem Divisor-Eingang anliegenden Schätzwert $X_\theta$ zu dividieren.

Bei der Ermittlung der Viskosität $\eta$ mittels eines Meßwerteaufnehmers der beschriebenen Art sind neben dem Erregerstrom $i_{exc}$ und der Geschwindigkeit $\theta$ außerdem eine Frequenz der Schwingungen des Meßrohrs 13 sowie die Dichte $\rho$ des Fluids zu berücksichtigen, vgl. hierzu die US-A 45 24 610.

Dazu umfaßt die Auswerteschaltung 50B ferner einen zweiten Funktionsblock 53, der dazu dient, mittels des Dichte-Meßwerts $X_\rho$ und mittels des Erregerfrequenz-Meßwerts $X_f$ einen entsprechenden, von der Dichte $\rho$ des Fluids und von der Erregerfrequenz $f_{exc}$ abhängigen Korrekturwert $X_{\rho,f}$ zu erzeugen.

Sowohl der Dichte-Meßwert $X_\rho$ als auch der ErregerfrequenzMeßwert $X_f$ sind Meßwerte, die beim Betrieb von Vibrations-Meßgeräten der beschriebenen Art, insb. auch im Betrieb von Coriolis-Massedurchfluß/Dichtemeßgeräten, üblicherweise ermittelt werden, vgl. hierzu z.B. die US-A 41 87 721, die US-A 45 24 610, die US-A 48 76 879, die US-A 56 48 616, die US-A 56 87 100 oder die EP-A 866 319. Somit kann eine Verfügbarkeit dieser Meßwerte $X_f$, $X_\rho$ für die erfindungsgemäße Ermittlung der Viskosität $\eta$ ohne weiteres vorausgesetzt werden.

Für den Korrekturwert $X_{\rho,f}$ gilt, insb. bei einem in der beschriebenen Weise torsional schwingenden Meßrohr 13, mit guter Nährung folgende, mittels des Funktionsblocks 53 zu realisierende, Beziehung:

$$X_{\rho,f} = X_\rho \cdot X_f \qquad\qquad (2)$$

Für den Fall, daß als Sensoren 17, 18 wegmessende Sensoren dienen, ist zur Ermittlung des Korrekturwerts $X_{\rho,f}$ anstelle des einfachen Erregerfrequenzmeßwert $X_f$ dessen Quadratwert $X_f^2$ einzusetzen, d.h. im Funktionsblock 53 ist neben einem Multiplizierer für die Gleichung (2) ein weiterer Multiplizierer oder ein Quadrierer vorzusehen.

Sowohl der Quotientenwert $X_{\Delta i}/X_\theta$ als auch der Korrekturwert $X_{\rho,f}$ sind gemäß Fig. 5 einem dritten Funktionsblock 54 der Auswerteschaltung 50B eingangsseitig zugeführt, der wiederum mittels des Quotientenwerts $X_{\Delta i}/X_\theta$ und mittels des Korrekturwerts $X_{\rho,f}$ den Viskositäts-Meßwert $X_\eta$ erzeugt.

Nach einer bevorzugten Ausgestaltung der Erfindung basiert die Ermittlung der Viskosität $\eta$ auf folgender Beziehung:

$$X_\eta = \frac{K_2}{X_{\rho,f}} \cdot \left(\frac{X_{\Delta i}}{X_\theta}\right)^2 \qquad (3)$$

Darin ist $K_2$ eine durch Kalibrierung zu bestimmende, insb. vom Quadrat der Nennweite des Meßrohrs 13 abhängige, Konstante.

Es hat sich gezeigt, daß der gemäß Gl. (3) ermittelte Viskositäts-Meßwert $X_\eta$ um so genauer mit der tatsächlichen Viskosität $\eta$ übereinstimmt, je niedriger die Viskosität $\eta$ und/oder je höher die Dichte $\rho$ des Fluids ist. Ferner wird die Viskosität $\eta$ bei dieser Ausgestaltung der Erfindung umso genauer bestimmt, je größer die Nennweite des Meßrohrs 13 ist.

Nach einer weiteren bevorzugten Ausgestaltung des Verfahrens der Erfindung ist daher für eine genauere Ermittlung des Viskositäts-Meßwerts $X_\eta$, insb. bei einer Viskosität $\eta$ größer 5 Pas (= Pascalsekunde) und/oder bei Nennweiten des Meßrohrs 13 kleiner als 8 mm (= Millimeter), folgende Beziehung zu Grunde gelegt:

$$X_\eta = \frac{1}{2} \cdot K_2 \cdot K_3 \cdot K_4 \cdot X_{\rho,f} \cdot \left(1 - \sqrt{1 - \frac{K_4}{K_3 \cdot X_{\rho,f}} \cdot \frac{X_{\Delta i}}{X_\theta}}\right)^2 \qquad (4)$$

Darin sind:

$K_3$ eine berechnete Konstante und
$K_4$ eine durch Kalibrierung zu bestimmende Konstante.

Gleichung (4) stellt praktisch eine universelle Lösung für Meßwerteaufnehmer dar, deren Meßrohr oder Meßrohre im Betrieb zu Torsionsschwingungen um eine Meßrohrlängsachse erregt werden. Für den Meßwerteaufnehmer 10 gemäß dem Ausführungsbeispiel liegt ein Wert der Konstante $K_3$ z.B. in einem Bereich von etwa 0,24 bis 0,25. Die Gleichung (4) berücksichtigt insb. die Tatsache, daß innerhalb des Arbeitsbereiches von Meßwertaufnehmern der beschriebenen Art, insb. mit in der beschriebenen Weise Torsionsschwingungen ausführendem Meßrohr, der Einfluß der im Fluid wirkenden, viskositätsabhängigen Reibungskräfte auf den Erregerstromanteil $\Delta i_{exc}$ in radialer Richtung zur Meßrohrlängsachse hin degressiv abnimmt. Bei der Konstante $K_3$ handelt es sich praktisch um einen Koeffizienten für einen quadratischen Teil vorgenannter Degression. Für den Fall, daß der Erregerstromanteil $\Delta i_{exc}$ und somit auch der Reibungsmeßwert $X_{\Delta i}$ gegen sehr kleine Werte strebt, geht Gleichung (4) in Gleichung (3) über.

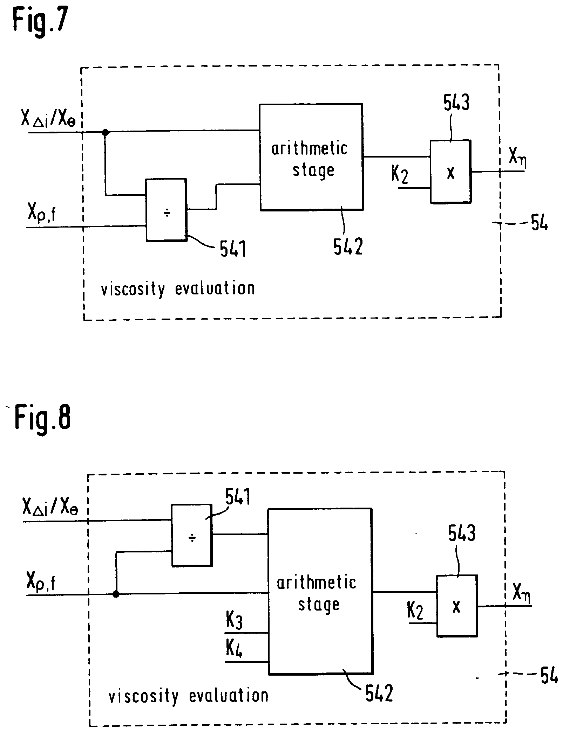

Zur Realisierung der Gleichung (3) oder (4) umfaßt der Funktionsblock 54 nach einer bevorzugten Ausgestaltung der Erfindung gemäß den Fig. 7 und 8 einen Dividierer 541 mit einem Dividend-Eingang für den Quotientenwert $X_{\Delta i}/X_\theta$ und mit einem Divisor-Eingang für den Korrekturwert $X_{\rho,f}$ zum Erzeugen eines ersten Zwischenwertes. Ferner umfaßt der Funktionsblock 54 eine Rechenstufe 542 mit einem ersten Eingang für den ersten Zwischenwert zum Erzeugen eines zur Viskosität $\eta$ proportionalen zweiten Zwischenwerts sowie einen Multiplizierer 543, der den am ersten Eingang anliegenden zweiten Zwischenwert mittels einer Multiplikation mit der Konstante $K_2$ in den Viskositäts-Meßwert $X_\eta$ überführt.

Zur Realsierung der Gleichung (3) ist die Rechenstufe 542 nach einer weiteren bevorzugten Ausgestaltung der Erfindung als ein Multplizierer konfiguriert, der, wie in Fig. 7 schematisch dargestellt, dazu dient den ersten Zwischenwert ausgangs des Dividierers 541 mittels des an einem zweiten Eingang der Rechenschaltung 542 anliegenden Quotientenwert $X_{\Delta i}/X_\theta$ in den zweiten Zwischenwert zu überführen.

Zur Realisierung der Gleichung (4) weist die Rechenstufe 542 nach einer anderen bevorzugten Ausgestaltung der Erfindung einen entsprechenden Radizierer für die Differenz unter der Wurzel von Gleichung (4) sowie einen entsprechenden Quadrierer für die Differenz mit der Wurzel auf. Ferner dient die Rechenstufe 542 dazu, einen mittels des Quadrieres erzeugten Quadratwert mit den Konstanten $K_3$ und $K_4$ sowie mit dem Korrekturwert $X_{\rho,f}$ zu multiplizieren und somit den zweiten Zwischenwert zu erzeugen.

Es hat sich ferner gezeigt, das die oben beschriebene Schätzung der Geschwindigkeit $\theta$ gemäß Gl. (1) in geringem Maße auch von der Dichte $\rho$ des Fluids abhängig ist, so daß praktisch gilt:

$$K_1 = K_1(\rho) \qquad (5)$$

Untersuchungen haben gezeigt, daß für den Meßwerteaufnehmer 10 gemäß dem Ausführungsbeispiel der Proportionalitätsfaktor $K_1$ unter Berücksichtigung seiner Dichteabhängikeit gemäß folgender Beziehung ermittelt werden kann:

$$K_1 = \frac{K_{1,0}}{1 + K_5 \cdot \left(X_\rho - \rho_0\right)} \quad\quad (6)$$

Darin sind

$\rho_0$      eine eingestellte oder gemessene Dichte eines der Kalibrierung des Meßwerteaufnehmers 10 dienenden Kalibrierfluids,

$K_{1,0}$      ein Proportionalitätsfaktor, für den das Kalibrierfluid führenden Meßwerteaufnehmer 10 und

$K_5$      eine von der Nennweite des Meßrohrs 13 abhängige, zu kalibrierende Konstante.

In Analogie zur Gl. (1) gilt für den Proportionalitätsfaktor $K_{1,0}$:

$$K_{1,0} = \frac{X_{\theta,0}}{X_{v,0}} \quad\quad (7)$$

Darin sind

$X_{\theta,0}$      erster Kalibrations-Meßwert, der die Geschwindigkeit $\theta$ für das das Kalibrierfluid führende Meßrohr 13 repräsentiert und

$X_{v,0}$      ein vom Sensorsignal $x_{s1}$ und/oder vom Sensorsignal $x_{s2}$ abgeleiteter zweiter Kalibrations-Meßwert, der eine Geschwindigkeit der lateralen Auslenkung des das Kalibrierfluid führenden Meßrohrs 13 repräsentiert.

Gleichung (6) ist, wie in Fig. 9 schematisch dargestellt, mittels eines Funktionsblocks 514 der Eingangsstufe 51 realisiert.

Die vorgenannten, dem Erzeugen des Viskositäts-Meßwertes $X_\eta$ dienenden Funktionsblöcke 52, 53, 54, 514 und ggf. auch der Multiplizierer 512 können in der dem Fachmann bekannten Weise z.B. mittels eines in der Auswerteschaltung 50B vorgesehenen Mikrocomputers und mittels in diesen entsprechend implementierter und darin ablaufender Programm-Codes realisiert werden. Das Übersetzen vorgenannter Gleichungen (1), (2), (3), (4), (6) in die entsprechenden Funktionsblöcke sowie das Erstellen von entsprechenden der Realisierung der Gleichungen (1), (2), (3), (4), (6) dienenden Programm-Codes für den Mikrocomputer ist dem Fachmann an und für sich geläufig und daher ohne detailliertere Erläuterungen durchführbar. Selbstverständlich können die Gleichungen auch ohne weiteres ganz oder teilweise mittels entsprechender diskret aufgebauter, analoger und/oder digitaler Rechenschaltungen in der Auswerteschaltung 50B dargestellt werden. In entsprechender Weise ist auch die Eingangstufe 51 mittels des vorgenannten Mikrocomputers realisierbar, wobei die Sensorsignale $x_{s1}$, $x_{s2}$ und der erfaßte Erregerstrom $i_{exc}$ selbstverständlich mittels Analog-zu-digital-Wandlern in entsprechende Digitalsignale umzuwandeln sind, vgl. hierzu insb. die EP-A 866 319.

Bei dem Meßwerteaufnehmer 10 gemäß dem Ausführungsbeispiel bewirkt insb. die torsionale Verdrehung, daß ein Verhältnis $\Delta i_{exc}/i_{exc}$ des Erregerstromanteils $\Delta i_{exc}$ zum Erregerstrom $i_{exc}$, normiert auf eine Vergleichs-Viskosität von etwa 4 Pas, bis zu 90% betragen kann, d.h. der Meßwerteaufnehmer 10 weist eine sehr hohe Empfindlichkeit gegenüber der Viskosität $\eta$ auf.

Es können aber auch andere dem Fachmann bekannte Meßwerteaufnehmer vom Vibrations-Typ, z.B. mit einem helixförmig gebogenen Meßrohr gemäß der US-A 53 57 811 oder gemäß der US-A 55 57 973, für die Messung der Viskosität $\eta$ verwendet werden. Ferner können auch, wie bereits erwähnt, Meßwerteaufnehmer vom Vibrations-Typ mit geraden oder mit gebogenen Meßrohren in geeigneter Weise zur Messung der Viskosität $\eta$ eingesetzt werden, wie sie z.B. in der US-A 53 01 557, US-A 56 48 616 oder in der US-A 57 96 011 beschrieben sind. Derartige Meßwerteaufnehmer können z.B. ein Verhältnis $\Delta i_{exc}/i_{exc}$ bezogen auf vorgenannte Vergleichs-Viskosität von in etwa 70% bis 80% aufweisen.

**Patentansprüche**

**1.** Vibrations-Meßgerät zum Messen einer Viskosität, einer Dichte und eines Massendurchflusses eines in einer Rohrleitung geführten Fluids, welches Vibrations-Meßgerät umfaßt:

     - einen Meßwertaufnehmer (10)

-- mit mindestens einem in die Rohrleitung eingefügten Meßrohr (13), das

--- ein das Fluid führendes Meßrohrlumen (13A) aufweist und
--- an einem Einlaßende sowie an einem Auslaßende schwingfähig eingespannt ist,

-- mit einer Erregeranordnung (16) zum Schwingenlassen des Meßrohrs (13), wobei zum Erzeugen viskoser Reibungen im Fluid das Meßrohr (13) im Betrieb zumindest anteilig in einem Lateral-Schwingungsmode, insb. Biege-Schwingungsmode, mit einer einstellbaren Errerfrequenz ($f_{exc}$) relativ zu einer Ruhelage oszilliert, sowie
- mit einer auf Schwingungen des Meßrohrs (13) reagierenden Sensoranordnung (60) zum Erzeugen eines einlaßseitige Lateral-Schwingungen, insb. Biegeschwingungen, des Meßrohrs (13) repräsentierenden ersten Sensorsignals ($x_{s1}$) und zum Erzeugen eines auslaßseitige Lateral-Schwingungen, insb. Biegeschwingungen, des Meßrohrs (13) repräsentierenden zweiten Sensorsignals ($x_{s2}$), sowie

- eine Meßgerät-Elektronik (50)

-- mit einer Erregerschaltung (50A), die einen die Erregeranordnung (16) speisenden Erregerstrom ($i_{exc}$) erzeugt, und
-- mit einer Auswerteschaltung (50B)

--- die mittels des <u>ersten</u> Sensorsignals ($x_{s1}$) <u>und/oder mittels des zweiten Sensorsignals</u> ($x_{s2}$) einen Schätzwert ($X_\theta$) für eine Geschwindigkeit einer Bewegung des Fluids erzeugt, die viskose Reibungen bewirkt, und
--- die mittels dieses Schätzwerts ($X_\theta$) und mittels des Erregerstroms ($i_{exc}$) einen die Viskosität des Fluids repräsentieren Viskositäts-Meßwert ($X_\eta$) erzeugt.

2. Vibrations-Meßgerät nach dem vorherigen Anspruch, wobei die Auswerteschaltung (50B) mittels des ersten Sensorsignals ($x_{s1}$) und/oder mittels des zweiten Sensorsignals ($x_{s2}$) auch einen Dichtemeßwert ($X_\rho$) erzeugt.

3. Vibrations-Meßgerät nach dem vorherigen Anspruch, wobei die Auswerteschaltung (50B) den Viskositäts-Meßwert ($X_\eta$) auch unter Verwendung des Dichtemeßwerts ($X_\rho$) erzeugt.

4. Verfahren zum Messen einer Viskosität eines in einer Rohrleitung geführten Fluids, welches Verfahren folgende Schritte umfaßt:

- Bewirken von Lateralschwingungen, insb. Biegeschwingungen, eines das Fluid führenden Meßrohrs (13) mittels einer Erregeranordnung (16) zum Erzeugen viskoser Reibung im Fluid,
- Erfassen eines die Erregeranordnung (16) speisenden Erregerstroms ($i_{exc}$),
- Erfassen von Lateralschwingungen des Meßrohrs (13) zum Erzeugen eines einlaßseitige Lateral-Schwingungen, insb. Biegeschwingungen, des Meßrohrs (13) repräsentierenden ersten Sensorsignals ($x_{s1}$) und zum Erzeugen eines auslaßseitige Lateral-Schwingungen, insb. Biegeschwingungen, des Meßrohrs (13) repräsentierenden zweiten Sensorsignals ($x_{s2}$),
- Erzeugen eines Schätzwerts ($X_\theta$) für eine Geschwindigkeit einer Bewegung des Fluids, die viskose Reibungen bewirkt unter Verwendung des ersten Sensorsignals ($x_{s1}$) und/oder des zweiten Sensorsignals ($x_{s2}$), sowie
- Erzeugen eines die Viskosität des Fluids repräsentierenden Viskositäts-Meßwert ($X_\eta$) unter Verwendung des Schätzwerts ($X_\theta$) und des Erregerstroms ($i_{exc}$).

5. Verfahren nach dem vorherigen Anspruch,

- wobei zum Erzeugen des Viskositäts-Meßwerts ($X_\eta$) zunächst ein eine Dichte des Fluids repräsentierenden Dichte-Meßwert ($X_\rho$) gebildet wird und
- wobei der Viskositäts-Meßwerts ($X_\eta$) auch unter Verwendung des Dichte-Meßwerts ($X_\rho$) erzeugt wird.

## Claims

1. Vibration measuring device designed to measure a viscosity, a density and a mass flow of a fluid conducted in a pipe, said vibration measuring device comprising:

- a measuring sensor (10)

-- with at least one measuring tube (13) inserted in the pipe, which

--- has an interior measuring tube channel (13A) conducting the fluid, and
--- which is clamped on the inlet end and on an outlet end in a manner that it is capable of vibrating,

-- with an exciter arrangement (16) designed to allow the measuring tube (13) to vibrate, wherein - for the purpose of generating viscous frictions in the fluid - the measuring tube (13) oscillates, during operation, at least partially in a lateral vibration mode, particularly in a flexural vibration mode, in relation to a rest position at an adjustable excitation frequency ($f_{exc}$), and
-- with a sensor arrangement (60) reacting to vibrations of the measuring tube (13), said sensor arrangement being designed to generate a first sensor signal ($X_{s1}$) representing lateral vibrations, particularly flexural vibrations, of the measuring tube (13) on the inlet side, and designed to generate a second sensor signal ($X_{s2}$) representing lateral vibrations, particularly flexural vibrations, of the measuring tube (13) on the outlet side, and

- a measuring device electronics module (50)

-- with an excitation circuit (50A) that generates an excitation current ($i_{exc}$) that feeds the exciter arrangement (16), and
-- with an evaluating circuit (50B)

--- which generates an estimated value (Xe) for a velocity of a movement of the fluid that causes viscous frictions using the first sensor signal ($X_{s1}$) and/or using the second sensor signal ($X_{s2}$), and
--- which generates a viscosity measured value ($X_\eta$), which represents the viscosity of the fluid, using this estimation value ($X_\theta$) and using the excitation current ($i_{exc}$).

2. Vibration measuring device as claimed in the previous claim, wherein the evaluating circuit (50B) also generates a density measured value ($X_\rho$) using the first sensor signal ($X_{s1}$) and/or using the second sensor signal ($X_{s2}$).

3. Vibration measuring device as claimed in the previous claim, wherein the evaluating circuit (50B) generates the viscosity measured value ($X_\eta$) also using the density measured value ($X_\rho$).

4. Procedure designed for measuring a viscosity of a fluid conducted in a pipe, said procedure comprising the following steps:

- Generation of lateral vibrations, particularly flexural vibrations, of a measuring tube (13) conducting the fluid, with an exciter arrangement (16) designed to generate viscous friction in the fluid,
- Measurement of an excitation current ($i_{exc}$) that feeds the exciter arrangement (16),
- Measurement of lateral vibrations of the measuring tube (13) designed to generate a first sensor signal ($X_{s1}$) representing lateral vibrations, particularly flexural vibrations, of the measuring tube (13) on the inlet side, and to generate a second sensor signal ($X_{s2}$) representing lateral vibrations, particularly flexural vibrations, of the measuring tube (13) on the outlet side,
- Generation of an estimated value ($X_\theta$) for a velocity of a movement of the fluid that causes viscous frictions using the first sensor signal ($X_{s1}$) and/or using the second sensor signal ($X_{s2}$), and
- Generation of a viscosity measured value ($X_\eta$), which represents the viscosity of the fluid, using the estimated value ($X_\theta$) and the excitation current ($i_{exc}$).

5. Procedure as claimed in the previous claim,

- wherein a density measured value ($X_\rho$), which represents a density of the fluid, is first formed to generate the viscosity measured value ($X_\eta$), and
- wherein the viscosity measured value ($X_\eta$) is also generated using the density measured value ($X_\rho$).

**EP 1 340 972 B1**

**Revendications**

1. Appareil de mesure de vibrations destiné à la mesure d'une viscosité, d'une densité et d'un débit massique d'un fluide guidé dans une conduite, lequel appareil de mesure de vibrations comprend :

   - un capteur de mesure (10)

     -- avec au moins un tube de mesure (13) inséré dans la conduite, qui

       --- présente un canal intérieur de tube de mesure (13A) guidant le fluide, et qui
       --- est fixé de façon apte à vibrer en un extrémité d'entrée et en une extrémité de sortie,

     -- avec un ensemble d'excitation (16) destiné à la mise en vibrations du tube de mesure (13), le tube de mesure (13) oscillant, en fonctionnement, par rapport à une position de repos au moins partiellement dans un mode de vibrations latérales, notamment un mode de vibrations de flexion, avec une fréquence d'excitation ($f_{exc}$) réglable, cette oscillation étant destinée à générer des frottements visqueux dans le fluide, ainsi que
     -- avec un ensemble capteur (60) réagissant aux vibrations du tube de mesure (13), lequel ensemble capteur est destiné à générer un premier signal de capteur ($X_{s1}$) représentant les vibrations latérales, notamment des vibrations de flexion, côté entrée du tube de mesure (13), et destiné à générer un deuxième signal de capteur ($X_{s2}$) représentant les vibrations latérales, notamment des vibrations de flexion, côté sortie du tube de mesure (13), ainsi que

   - une électronique d'appareil de mesure (50)

     -- avec un circuit d'excitation (50A), qui génère un courant d'excitation ($i_{exc}$) alimentant l'ensemble d'excitation (16), et
     -- avec un circuit d'exploitation (50B)

       --- qui génère, au moyen du premier signal de capteur ($X_{s1}$) et/ou au moyen du deuxième signal de capteur ($X_{s2}$) une valeur d'estimation ($X_\theta$) pour une vitesse de mouvement du fluide, laquelle provoque des frottements visqueux, et
       --- qui génère, au moyen de la valeur d'estimation ($X_\theta$) et au moyen du courant d'excitation ($i_{exc}$), une valeur mesurée de viscosité ($X_\eta$) représentant la viscosité du fluide.

2. Appareil de mesure de vibrations selon la revendication précédente, pour lequel le circuit d'exploitation (50B) génère également une valeur mesurée de densité ($X_\rho$) au moyen du premier signal de capteur ($X_{s1}$) et/ou du deuxième signal de capteur ($X_{s2}$).

3. Appareil de mesure de vibrations selon la revendication précédente, pour lequel le circuit d'exploitation (50B) génère la valeur mesurée de viscosité ($X_\eta$) également en utilisant la valeur mesurée de densité ($X_\rho$).

4. Procédé destiné à la mesure d'une viscosité d'un fluide guidé dans une conduite, lequel procédé comprend les étapes suivantes :

   - Génération de vibrations latérales, notamment de vibrations de flexion, d'un tube de mesure (13) guidant un fluide, au moyen d'un ensemble d'excitation (16) destiné à générer un frottement visqueux dans le fluide,
   - Mesure d'un courant d'excitation ($i_{exc}$) alimentant l'ensemble d'excitation (16),
   - Mesure des vibrations latérales du tube de mesure (13) destinée à la génération d'un premier signal de capteur ($X_{s1}$) représentant les vibrations latérales, notamment des vibrations de flexion, côté entrée du tube de mesure (13) et à la génération d'un deuxième signal de capteur ($X_{s2}$) représentant les vibrations latérales, notamment des vibrations de flexion, côté sortie du tube de mesure (13),
   - Génération d'une valeur d'estimation ($X_\theta$) pour une vitesse de déplacement du fluide, qui provoque des frottements visqueux, en utilisant le premier signal de capteur ($X_{s1}$) et/ou le deuxième signal de capteur ($X_{s2}$), ainsi que
   - Génération d'une valeur mesurée de viscosité ($X_\eta$) représentant la viscosité du fluide, en utilisant la valeur d'estimation ($X_\theta$) et le courant d'excitation ($i_{exc}$).

**5.** Procédé selon la revendication précédente,

- pour lequel est formée, pour la génération de la valeur mesurée de viscosité ($X_\eta$), dans un premier temps une valeur mesurée de densité ($X_\rho$) représentant une densité du fluide, et
- pour lequel la valeur mesurée de viscosité ($X_\eta$) est générée également en utilisant la valeur mesurée de densité ($X_\rho$).

## Fig.1

Fig. 2

Fig.3

## Fig. 4

## Fig.5

## Fig.6

## Fig.9

## Fig.7

$X_{\Delta i}/X_\Theta$

$X_{\rho,f}$

÷   541

arithmetic stage   542

543

$K_2$   x

$X_\eta$

54

viscosity evaluation

## Fig.8

$X_{\Delta i}/X_\Theta$

541

÷

$X_{\rho,f}$

arithmetic stage

$K_3$

$K_4$

543

$K_2$   x

$X_\eta$

54

viscosity evaluation   542

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4187721 A
- US 4801897 A
- US 4876879 A
- US 5301557 A
- US 5357811 A
- US 5557973 A
- US 5648616 A
- US 5687100 A
- US 5796011 A
- US 6006609 A
- EP 866319 A
- US 4524610 A
- WO 9516897 A
- US 5359881 A
- US 5253533 A